# EUROPEAN PATENT APPLICATION

(11) **EP 1 146 491 A2**
(43) Date of publication of application: **17.10.2001**
(21) Application number: 00403060.7
(22) Date of filing: 03.11.2000
(51) Int. Cl.: G07F 19/00, G06F 17/60

(54) **Consumer transaction facility, consumer transaction facility system and recording medium, which records transaction, screen data updating program and which is readable in computer**

(30) Priority: 13.04.2000 JP 2000112679
(71) Applicant: FUJITSU LIMITED, Kawasaki-shi, Kanagawa 211-8588 (JP)
(72) Inventor: Ohtsuka, Yukio c/o Fujitsu terminal systems Ltd, Maebashi Gunma 371-0855 (JP)
(74) Representative: Joly, Jean-Jacques

(57) **Abstract**

An automation facility (101) for performing an automation transaction by conversation to a user such as an ATM (Automatic Teller Machine) and a CD (Cash Dispenser) or the like of a bank or a consumer credit company comprises a transaction screen data acquisition unit (301) and storing unit (302). The transaction screen data acquisition unit (301) acquires a transaction screen data as a screen data for displaying on the transaction including a cash deal, a cash transfer, a balance inquiry, an electronic business transaction, reservation of a hotel or the like, distribution of a free-ticket of a movie or the like, offering of various information, a commercial message and an advertisement or the like via a communication line. The storing unit 302 stores the transaction screen data, which is acquired by the transaction screen data acquisition unit (301).

## Description

### FIELD OF THE INVENTION

The present invention relates to a consumer transaction facility (automatic facility) such as an ATM (Automatic Teller Machine) and a CD (Cash Dispenser) or the like of a bank or a consumer credit company, a consumer transaction facility system including a plurality of consumer transaction facilities and server devices, which are connected to intercommunicate and a recording medium which is readable in a computer and records a transaction screen data updating program for updating a transaction screen data, i.e., a transaction screen as a screen data indicated by a consumer transaction facility on a transaction, such as a cash deal, a cash transfer, a balance inquiry, an electronic business transaction, reservation of a hotel or the like, distribution of a free-ticket of a movie or the like, offering of various information, a commercial message and an advertisement or the like.

### BACKGROUND OF THE INVENTION

In a bank or a consumer credit company, in order to alleviate the service over the counter, a consumer transaction facility (automatic facility) is put in place to automatically treat a case deal, a cash transfer and a balance inquiry or the like. However, with a conventional consumer transaction facility, only a fixed transaction screen is displayed on the transaction. Further, updating the transaction screen is problematic because it takes much time and involves large manpower and high cost. Therefore, in order to update the transaction screen, a means or method to solve the above problem is anxiously desired.

For example, there is a conventional consumer transaction facility including a CD-ROM drive and a hard disk. This type of consumer transaction facility reads various programs, a data and a transaction screen from the CD-ROM by the CD-ROM drive on the installation of this consumer transaction facility to install them in a hard disk thereof. After the consumer transaction facility is activated, the transaction screen data is fixed. Then, the fixed transaction screen data displays a constant transaction screen. Updating of the transaction screen data requires installation of a transaction screen data from the CD-ROM by a service staff for every consumer transaction facility.

However, according to the above described conventional art, in order to update the transaction screen data, it is required that this data be inputted from a transportable recording medium (CD-ROM or the like), so that the transportable recording medium is supposed to be prepared and the service staff has to install the program for every consumer transaction facility. This involves a problem such that the update of the transaction screen data cannot be performed quickly or in real time, an appropriate transaction screen is not displayed and it takes much trouble and a high cost. Due to the fact that the update of the transaction screen data cannot be performed quickly or in real time and it is troublesome and costly, there is a problem such that it is difficult to update the data frequently so that the transaction screen is fixed and it is difficult to provide a delicate service with a screen in response to a place (a branch or the like) where the consumer transaction facility is installed or a client.

### SUMMARY OF THE INVENTION

An object of the present invention is to provide a consumer transaction facility, consumer transaction facility system and recording medium which records transaction screen data updating program and is readable in computer to display an appropriate transaction screen, save labor and reduce costs.

The above mentioned problems can be solved by a consumer transaction facility (automatic facility 101) according to the present invention. The consumer transaction facility (automatic facility 101) according to the present invention comprises acquisition means (a transaction screen data acquisition unit 301) for acquiring a transaction screen data of a screen to be displayed on the transaction via a predetermined communication line and storing means (a storing unit 302) for storing said transaction screen data, which is acquired by said acquisition means. In this case, the consumer transaction facility means so called automatic facility such as an ATM (Automatic Teller Machine) and a CD (Cash Dispenser) or the like of a bank or a consumer credit company for performing an automation transaction by conversation to a user, i.e., a client. Further, a transaction includes a cash deal, a cash transfer, a balance inquiry, an electronic business transaction, reservation of a hotel or the like, distribution of a free-ticket of a movie or the like, offering of various information, a commercial message and an advertisement or the like.

A communication line includes a dedicated line and a public circuit. A communication protocol is not particularly limited. For example, it may be TCP/IP or the like. A transmitter of the transaction screen data may be a transaction host to hold a user information such as information relative to a client's account or the like. Alternatively, the transmitter of the transaction screen data may be a Web server or a server in a LAN (Local Area Network) if the consumer transaction facility is connected via a LAN. Further, recording means is not particularly limited if it can be written. The recording means, for example, may be a RAM or a hard disk or the like.

According to this consumer transaction facility, acquisition means acquires the transaction screen data via a communication line and storing means stores the transaction screen data, which is acquired by the acquisition means. Accordingly, it is possible to update the transaction screen data via the communication line speedy or in a real time. Further, since it is not necessary to prepare a transportable recording medium for every update and install every consumer transaction facility by the service staff, it is possible to display an appropriate transaction screen, save labor and reduce the cost.

The acquisition means may acquire a whole or a part of the transaction screen data at a predetermined timing other than a timing at the transaction. Hereby, a whole or a partial install of the transaction screen data can be omitted upon the transaction, so that the processing time can be cut down on the transaction and a smooth transaction processing can be obtained.

The transaction screen data is separated into a first data (character information) with a small data size such as a character data or the like and a second data (image contents) with a large data size such as an image data and an animated data or the like. The acquisition means may acquire the first data on the transaction and acquires the second data at a predetermined timing other than a timing at the transaction.
Accordingly, a latest data may be used as the first data since the first data does not require much time for installing. With respect to the second data, since it requires much time for installing, the second data is installed in advance. Thus, a smooth transaction processing can be obtained.

The transaction screen data may be separated into a first data (fluxional information) with a high frequency of changing and a second data (fixed information) with a low frequency of changing and the acquisition means acquires the first data on the transaction and acquires the second data at a predetermined timing other than a timing at the transaction. Accordingly, a latest data may be used as the first data and the second data is installed in advance, so that a smooth transaction processing can be obtained.

The transaction screen data may be described by HTML (Hyper Text Markup Language) and HTML screen display means (a HTML screen display unit 304) for displaying the transaction screen according to the transaction screen data, which is described by the HTML, may be provided. Accordingly, despite of kinds of a consumer transaction facility and a device for generating a transaction screen data, a general purpose HTML generation tool with multi functions and a usability is capable of generating a transaction screen data, so that it becomes easy to generate the transaction screen data and the cost can be reduced. The acquisition means may acquire the transaction screen data via the Internet. Accordingly, if there is a server device, which is capable of being connected to the Internet, the maintenance of the transaction screen, namely, setting and updating of the transaction screen data, can be performed from anywhere. As a result, the maintenance of the transaction screen becomes easy.

The consumer transaction facility system according to the present invention comprises a plurality of consumer transaction facilities (automation facilities 404) and a server device (a LAN server 402), which are connected to intercommunicate. Said server device comprises server acquisition means (a server transaction screen data acquisition unit 701) for acquiring said transaction screen data of said consumer transaction facility from the outside of said consumer transaction facility system via a predetermined communication line and transmission means (a transaction screen data transmission unit 703) for transmitting said transaction screen data acquired by said server acquisition means to said plurality of consumer transaction facilities. Said consumer transaction facility comprises acquisition means (a transaction screen data acquisition unit 801) for acquiring said transaction screen data from said transmission means and storing means (a storing unit 302) for storing said transaction screen data, which is acquired by said acquisition means.

In this case, the consumer transaction facility means so called automatic facility such as an ATM and a CD or the like of a bank or a consumer credit company for performing an automation transaction by conversation to a user, i.e., a client. Further, a transaction includes a cash deal, a cash transfer, a balance inquiry, an electronic business transaction, reservation of a hotel or the like, distribution of a free-ticket of a movie or the like, offering of various information, a commercial message and an advertisement or the like. A communication line includes a dedicated line and a public circuit. A transmitter of the transaction screen data may be a transaction host to hold a user information such as information relative to a client's account or the like or a Web server. A communication protocol for the communication between the server device and the transmitter of the transaction screen data and the communication between the server device and the consumer transaction facility is not particularly limited. For example, it may be TCP/IP or the like. Further, recording means is not particularly limited if it can be written. The recording means, for example, may be a RAM or a hard disk or the like.

According to this consumer transaction facility system, the server acquisition means of the server device acquires the transaction screen data via the communication line and the transmission means transmits the transaction screen data, which is acquired by the server acquisition means to a plurality of consumer transaction facilities. The acquisition means of the consumer transaction facility acquires the transaction screen data from the transmission means and the storing means stores the transaction screen data, which is acquired by the acquisition means. Accordingly, it is possible to update the transaction screen data via the communication line speedy or in a real time. Further, since it is not necessary to prepare a transportable recording medium for every update and install every consumer transaction facility by the service staff, it is possible to display an appropriate transaction screen, save labor and reduce the cost.

A recording medium, which is readable in a computer and records a transaction screen data updating program according to the present invention comprises a recording medium, which records a transaction screen data updating program, for updating said transaction screen data of a consumer transaction facility. Said transaction screen data updating program allows a computer to execute step for acquiring said transaction screen data via a predetermined communication line and step for updating said transaction screen data, which is stored in said consumer transaction facility by said transaction screen data acquired by said acquiring step.

The recording medium, which is readable in a computer and records a transaction screen data updating program, for updating said transaction screen data of a consumer transaction facility may record said transaction screen data updating program for allowing a computer to execute server acquiring step for acquiring said transaction screen data via a predetermined communication line, step for transmitting said transaction screen data acquired by said server acquiring step to a plurality of consumer transaction facilities, step for acquiring said transaction screen data, which is transmitted by said step for transmitting and step for updating said transaction screen data, which is stored in said consumer transaction facility by said transaction screen data, which is acquired by said step for acquiring.

Here, "a recording medium, which is readable in a computer" includes "a transportable physical medium" including a magnetic disk such as a floppy disk or the like, a semiconductor memory such as a ROM, an EPROM, an EEPROM, a flash ROM or the like (including a built-in memory in a cartridge and a PC card or the like), an optical disk such as a CD-ROM and a DVD or the like and an optical magnetic disk such as an MO or the like; and "a physical medium for a solid object" such as a ROM, a RAM and a hard disk or the like, which are built in various computer systems.

Further, a "recording medium, which is readable in a computer" may include a communication medium for holding a program for a short period, such as a communication line upon transmitting a program via a network such as a LAN, a WAN and the Internet or the like. Further, a "program" means a description of a data processing method. The language for description and a description method are not particularly limited and a format of a source code, a binary code and an effect system or the like is not limited. The "program" is not necessary to be configured uniquely, but includes a dispersed configuration as a plurality of modules and a library and a configuration to attain its function in cooperation with the other program such as an OS or the like.

A first and second embodiments of the consumer transaction facility, the consumer transaction facility system and the recording medium which records the transaction screen data updating the program and which is readable in the computer according to the present invention will more fully be apparent from the following detailed description with accompanying drawings, but it is to be understood that the practical arrangement is not limited to these specific embodiments.

Other objects and features of this invention will become understood from the following description with reference to the accompanying drawings.

### BRIEF DESCRIPTION OF THE DRAWINGS

Fig. 1 is a schematic block diagram showing a consumer transaction facility system's constitution of a first embodiment according to the present invention.
Fig. 2 is a schematic block view showing a hard ware constitution of the automatic facility shown in Fig. 1.
Fig. 3 is a schematic block diagram showing a function of the automatic facility shown in Fig. 1.
Fig. 4 is a flow chart showing a flow of a download of a transaction screen data in the automatic facility according to the first embodiment.
Fig. 5 is an explanatory view showing a processing for downloading the transaction screen data of the automatic facility according to the first embodiment.
Figs. 6A and 6B are explanatory views showing a method for setting a date of the processing for downloading the transaction screen data of the automatic facility according to the first embodiment.
Fig. 7 is a flow chart for showing a flow of the processing of displaying the transaction screen of the automatic facility according to the first embodiment.
Fig. 8 shows a constitution of the transaction screen data of the automatic facility according to the first embodiment.
Fig. 9 is an explanatory view showing a method for displaying the transaction screen of the automatic facility according to the first embodiment.
Fig. 10 is an explanatory view showing a method for displaying the transaction screen of the automatic facility according to the other embodiment.
Fig. 11 is a schematic block view showing the automatic facility system's constitution according to a second embodiment of the present invention.
Fig. 12 is a schematic block view showing a hard ware constitution of a LAN server shown in Fig. 11.
Fig. 13 is a schematic block view showing a hard ware constitution of the automatic facility shown in Fig. 11.
Fig. 14 is a schematic block view showing a LAN server's constitution shown in Fig. 11.
Fig. 15 is a schematic block view showing the automatic facility's constitution shown in Fig. 11.
Fig. 16 is a flow chart showing a flow of the processing for downloading the transaction screen data from the LAN server to the automatic facility according to the second embodiment.

### DESCRIPTION OF THE PREFERRED EMBODIMENT

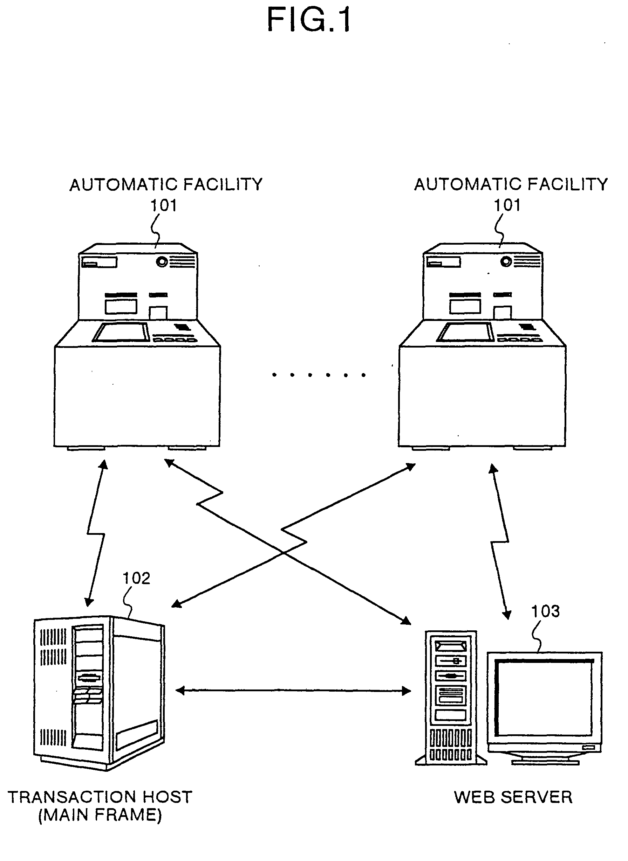

Fig. 1 is a schematic block diagram showing the consumer transaction facility system's constitution of a first embodiment according to the present invention. This consumer transaction facility system comprises at least one automatic facility 101, a transaction host (main frame) 102 for holding the information relative to a user's, i.e., a client's account or the like communicating with the automatic facility 101 via a dedicated line or a public circuit in the transaction and a Web server 103 for transmitting a transaction screen data to the automatic facility 101 via the dedicated line or the public circuit on updating the transaction screen data. The transaction host 102 may transmit the transaction screen data to the automatic facility 101 in response to a request from the automatic facility 101 or a request from the transaction host 102 at a predetermined timing or an arbitrary timing in addition to the communication with the automatic facility 101 on the transaction.

The Web server 103 transmits the transaction screen data to the automatic facility 101 in response to a request from the automatic facility 101 or a request from the Web server 103 at a predetermined timing or an arbitrary timing. Further, the Web server 103 may communicate with the automatic facility 101 on the transaction to control the transaction in cooperation with the automatic facility 101. The automatic facility 101 receives the transaction screen data from the Web server 103 via the dedicated line or the public circuit. The communication between the automatic facility 101 and the Web server 103 may be performed by a dial-up remote access or via the Internet. The communication between the automatic facility 101 and the Web server 103 may be performed in a LAN (Local Area Network). Further, the Web server 103 may transmit a program to the automatic facility 101.

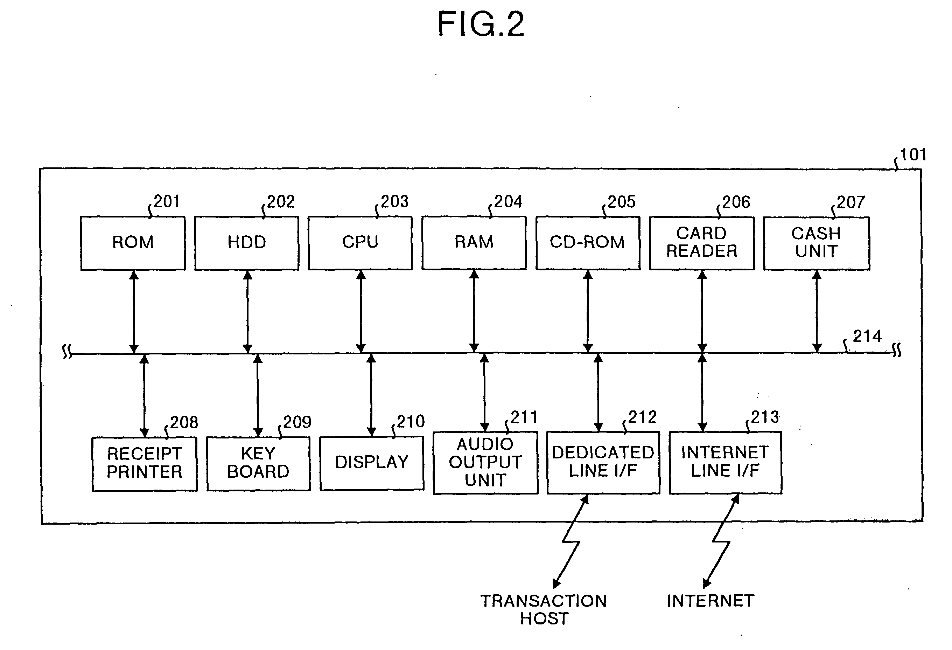

Fig. 2 is a schematic block view showing a hard ware constitution of the automatic facility 101 shown in Fig. 1. The automatic facility 101 comprises a ROM (Read Only Memory) 201 for storing a boot program or the like, a controlling program for controlling each unit of the automatic facility 101, a hard disk (HDD) 202 for storing the transaction screen data or the like, a CPU (Central Processing Unit) 203 for controlling each unit of the automatic facility 101 on the basis of the program which is stored in the ROM 201 and the HDD 202, a RAM (Random Access Memory) 204 to be used as a working area of the CPU 203 or the like, a CD-ROM drive 205 for reading the program and the data from the CD-ROM and a card reader 206 for reading the data from the card such as a bank card issued by a bank and a credit card issued by a consumer credit company or the like.

Further, the automatic facility 101 comprises a cash unit 207 for processing cash such as receiving and payment of cash or the like, a receipt printer 208 for printing a receipt, a key board 209 to be inputted by the user, a display 210 such as a CRT (Cathode Ray Tube) and a LCD (Liquid Crystal Display) or the like for displaying the transaction screen, an audio output unit 211 with a speaker for outputting an audio data, a dedicated line interface (I/F) 212 for communicating with the transaction host 102 via a dedicated line, the Internet line I/F 213 for communicating with the Web server 103 via the Internet and a bus 214 for connecting these respective units.

The ROM 201 and the HDD 202 stores the boot program, the controlling program and the transaction screen data or the like. The kinds of the ROM 201 and the HDD 202 are not particularly limited. Other recording mediums may be utilized in addition to the ROM 201 and the HDD 202. The CPU 203 controls the display of the transaction screen of the display 210 or the like on the basis of the program and the transaction screen data stored in the ROM 201 and the HDD 202. The RAM 204 is used as a working area of the CPU 203. For example, the CD-ROM drive 205 is used to install the controlling program from the CD-ROM into the HDD 202 upon booting the system. In this case, the DVD drive and the other units for activating the transportable recording mediums may be used in place of the CD-ROM drive 205.

The card reader 206 reads information from a bank card of a bank and a credit card of a consumer credit company or the like to transfer the information to the CPU 203. The cash unit 207 processes cash such as receiving and payment of cash or the like. The receipt printer 208 prints out a receipt. The key board 209 transmits the input to the CPU 203 from the user. The display 210 displays various screens such as a transaction screen or the like. The audio output unit 211 outputs the audio data. The dedicated line interface (I/F) 212 communicates with the transaction host 102 via a dedicated line.

The Internet line I/F 213 communicates with the Web server 103 via the Internet. Here, other than the dedicated line I/F 212, a public circuit I/F may be used via the public circuit I/F to communicate with the transaction host 102. Further, this public circuit I/F may be used to connect to the Internet so as to communicate with the Web server 103. In other words, the communication with the transaction host 102 and the Web server 103 may be performed by physically one communication interface.

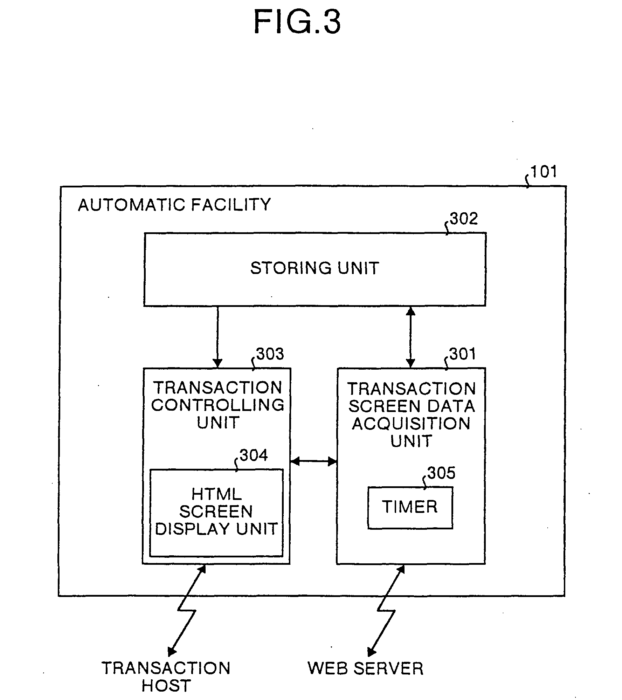

Fig. 3 is a schematic block diagram showing a function of the automatic facility 101 shown in Fig. 1. The automatic facility 101 comprises a transaction screen data acquisition unit 301 for acquiring the transaction screen data from the Web server 103 via a predetermined communication line, a storing unit 302 for storing the transaction screen data, which is acquired by the transaction screen data acquisition unit 301 and a transaction controlling unit 303 for switching the transaction screen appropriately with the transaction screen data stored in the storing unit 302 and displaying a switched screen. The transaction screen data is described on the basis of HTML (Hyper Text Markup Language) and it is generated by a general purpose HTML generation tool with multi functions and a usability in the Web server 103 and the other personal computers or the like.

The transaction screen data acquisition unit 301 owns a timer 305 and for example, acquires the transaction screen data via the Internet line I/F 213 at a predetermined time. As a communication protocol on acquiring the transaction screen data, an FTP (File Transfer Protocol) or an HTTP (Hyper Text Transfer Protocol) may be used. However, by using the HTTP, the transaction screen data can be obtained despite of file formats.

The storing unit 302 stores the transaction screen data acquired by the transaction screen data acquisition unit 301 in the recording medium such as the HDD 202 and the RAM 204 or the like. The transaction controlling unit 303 serves to communicate with the transaction host 102 or the Web server 103 on the transaction. Further, the storing unit 302 has a HTML screen display unit 304 for displaying a screen according to the transaction screen data, which is described by the HTML to appropriately input the transaction screen data stored in the storing unit 302 and display it to on the display 210.

Heretofore, the functional constitution of the automatic facility 101 is explained. However, respective components of the automatic facility 101 in Fig. 3 are shown conceptually in functions, so that the automatic facility 101 is not required to be configured as shown in Fig. 3 physically. For example, the CPU 203 and the program, which is understood and executed in this CPU 203, may realize a whole or a portion of the processing functions belonging to the automatic facility 101. In other words, a computer program to command the CPU 203 in cooperation with an OS (Operation System) or the like is stored in the ROM 201 and the HDD 202 so that the CPU 203 performs various processing. Then, the CPU 203 performs various processing according to this program. Further, a whole or a portion of the processing functions belonging to the automatic facility 101 may be realized as a hard ware in a wired logic.

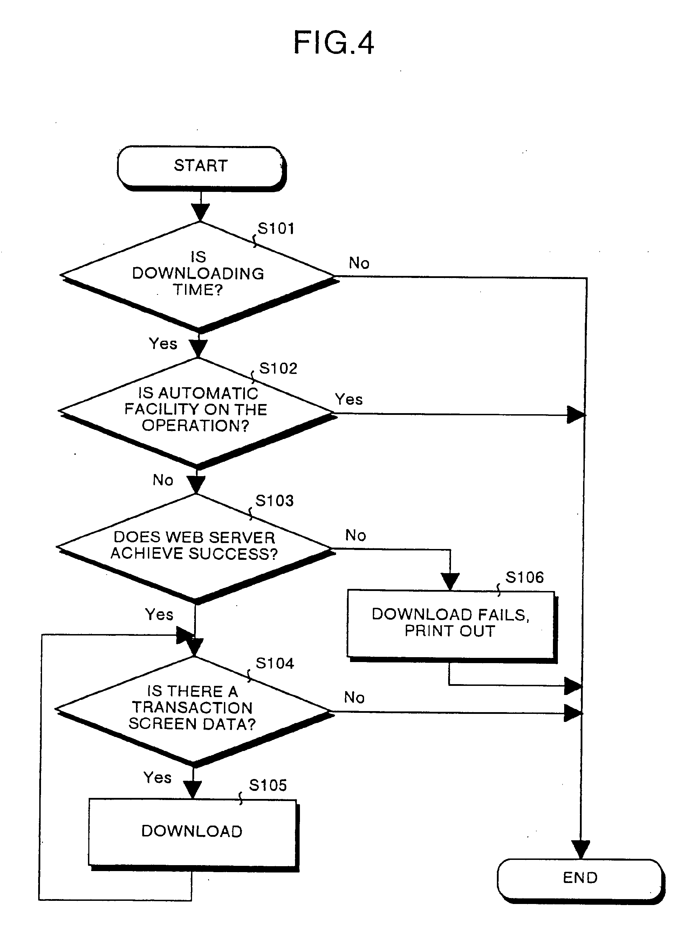

In the above described constitution, the operation of the first embodiment will be explained below with reference to the drawings. Fig. 4 is a flow chart showing a flow of the download of the transaction screen data in the automatic facility 101 according to the first embodiment. In this download processing of the transaction screen data, at first, the transaction screen data acquisition unit 301 detects the downloaded is performed at a predetermined time or not (S101). If the downloaded is not performed at a predetermined time, the transaction screen data acquisition unit 301 terminates the processing and the processing is shifted to a normal operating (transaction) processing. On the other hand, if the download is performed at a predetermined time, the transaction screen data acquisition unit 301 detects whether the automatic facility is on the operation (transaction) or not (S102).

If the automatic facility is on the operation, the transaction screen data acquisition unit 301 terminates the processing to shift to a normal operating processing. If it is not on the operation, the transaction screen data acquisition unit 301 tries to connect to the Web server 103 and detects whether the connection to the Web server 103 achieves success or not (S103). If the connection to the Web server 103 fails, the receipt printer 208 serves to print out a notification to notify that the download fails. Then, the transaction screen data acquisition unit 301 terminates the processing and the processing is shifted to a normal operation processing. On the other hand, if the connection to the Web server 103 achieves success, it detects whether there is the transaction screen data (file) in the Web server 103 or not (S104). If there is no transaction screen data, it terminates the processing and the processing is shifted to the normal operation processing.

On the other hand, if there is the transaction screen data in the Web server 103, the download of the transaction screen data to the storing unit 302 is repeatedly performed until the data is completely downloaded (S105). After a whole data is downloaded, this processing is terminated to shift to the normal operation processing. Other than the predetermined time, for example, at the time when the transaction screen date to be newly set or updated exists, the Web server 103 may transmit a transmission request. Further, at the time when the transaction screen data acquisition unit 301 receiver the transmission request, the processing for downloading the transaction screen data may be performed in step S102.

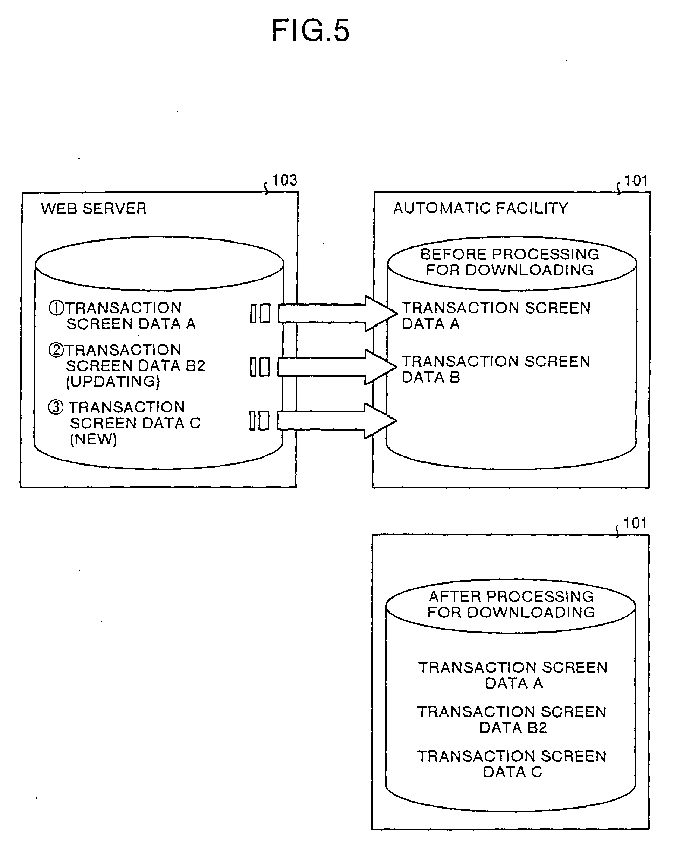

Fig. 5 is an explanatory view showing the processing for downloading the transaction screen data of the automatic facility 101 according to the first embodiment. In this processing for downloading the transaction screen data, the transaction screen data acquisition unit 301 compares a generation date and a size of respective transaction screed data (file) held by the Web server 103 with a creation date and a size of respective transaction screed data, which is already downloaded in the storing unit 302 of the automatic facility 101. In this case, the creation date and the size do not limit the above comparison of the information. For example, serial numbers may be added to respective transaction screen data, so that these serial numbers may be compared.

In the example in Fig. 5, with respect to a transaction screen data A, it is held by the Web server 103 and a creation date and a size thereof are identical with those stored in the storing unit 302, so that the download is not performed. With respect to a transaction screen data B, it is updated in the Web server 103 side and it is held by the Web server 103. However, the creation data and the size thereof are not identical with those stored in the storing unit 302, so that the download is performed to update the transaction screen data B.

With respect to a transaction screen data C, it is newly created in the Web server 103 side and the contents to be compared are not stored in the storing unit 302. Therefore, the transaction screen data C is newly created due to the processing for downloading. When the processing for downloading is terminated, respective transaction screen data stored in the Web server 103 are brought in identical with those stored in the storing unit 302.

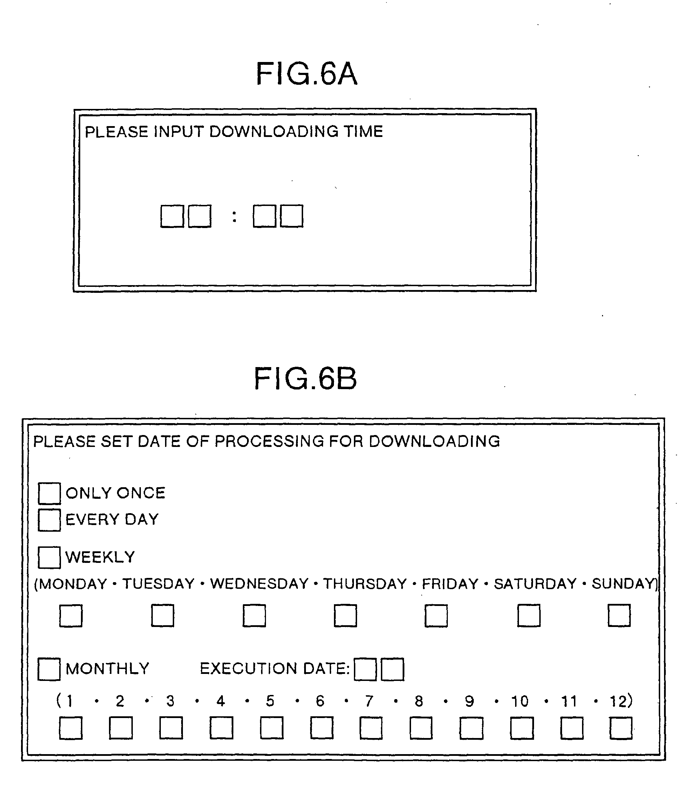

Figs. 6A and 6B are explanatory views showing a method for setting a date of the processing for downloading the transaction screen data of the automatic facility 101 according to the first embodiment. The date of the processing for downloading the transaction screen data is set such that the transaction screen data acquisition unit 301 displays a screen as shown in Fig. 6A to wait input of the downloading time (time when the transaction screen data is to be downloaded) from the service staff. If the downloading time is inputted by the service staff via the key board 209, the transaction screen data acquisition unit 301 displays a screen as shown in Fig. 6B to wait input of the date when the processing for downloading of the transaction screen data is to be performed.

Here, for example, it is possible to chose one among only one download, everyday download, weekly download and monthly download or the like. In this case, in order to choose the weekly download, any one of day of the week is designated and in order to choose the monthly download, any one of month and any one of date are chosen. The downloading time and date may be designated to any time and any date, however, it is preferable to choose the time and the date when the utilization rate of the automatic facility 101 is low such as holidays and mid nights. Thus, the transaction processing is prevented from being seriously disturbed due to the processing for downloading of the transaction screen data. The setting date for the processing for downloading of the transaction screen data is stored in the HDD 202 and the processing for downloading of the transaction screen data is to be performed at this date. The transaction controlling unit 303 displays the transaction screen on the basis of the transaction screen data, which is downloaded as described above.

In this sate, the transaction screen data may be separated into a first data with a small data size such as a character data or the like (for example, it may be an information not more than 100 kilo byte including a small sized figure; hereinafter, referred to as a character information) and a second data with a large data size such as an image data and an animated data or the like (for example, an information not less than 100 kilo byte including a character; hereinafter, referred to as image contents). With respect to the image contents, it may be provided with the above described processing for downloading of the transaction screen data. With respect to the character information, it may be downloaded for every transaction.

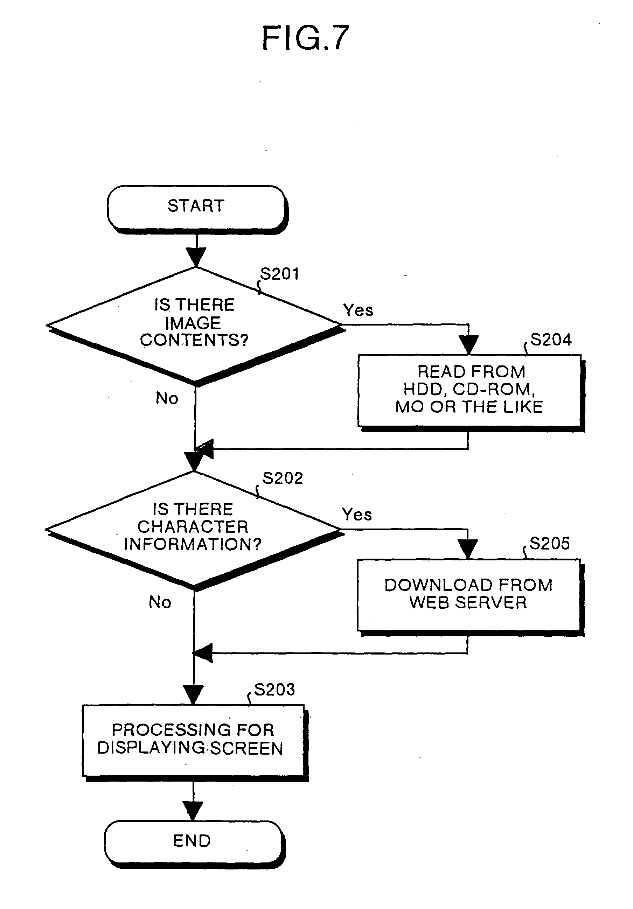

The processing of displaying the transaction screen in the case that the character information is downloaded via a communication line on the transaction will be explained below. Fig. 7 is a flow chart for showing a flow of the processing of displaying the transaction screen of the automatic facility 101 according to the first embodiment. In the processing of displaying the transaction screen, the transaction controlling unit 303 detects whether the image contents are included in the transaction screen data for the transaction screen to be displayed or not (S201). In the case that the image contents are included in the transaction screen data for the transaction screen to be displayed, the transaction controlling unit 303 reads the image contents from the storing unit 302 (from the HDD 202 or the CD-ROM) (S204).

Then, the transaction controlling unit 303 detects whether the character information is included in the transaction screen data for the transaction screen to be displayed or not (S202). In the case that the character information is included in the transaction screen data for the transaction screen to be displayed, the transaction screen data acquisition unit 301 connects the automatic facility 101 to the Web server 103 to download the character information (S205). Then, the transaction controlling unit 303 displays the transaction screen on the display 210 if the required image contents and the character information are downloaded (S203).

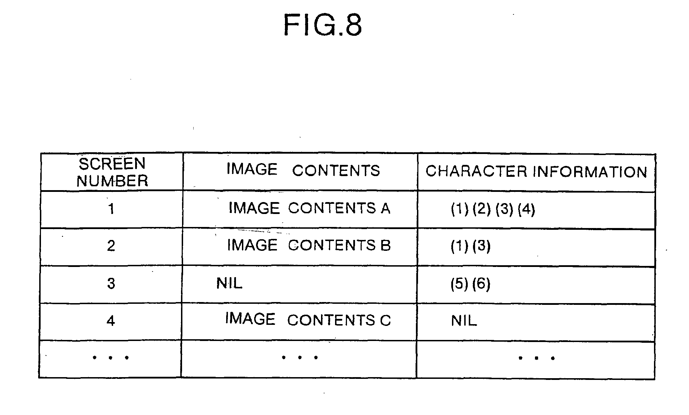

Fig. 8 shows a constitution of the transaction screen data of the automatic facility 101 according to the first embodiment. The transaction screen data is constituted of the image contents and/or at least one character information. For example, the transaction screen data of a screen No. 1 comprises a image contents A, a character information 1, a character information 2, a character information 3 and a character information 4. The transaction screen data of a screen No. 2 comprises an image contents B, the character information 1 and the character information 3. The transaction screen data of a screen No. 3 comprises a character information 5 and a character information 6. The transaction screen data of a screen No. 4 comprises an image contents C.

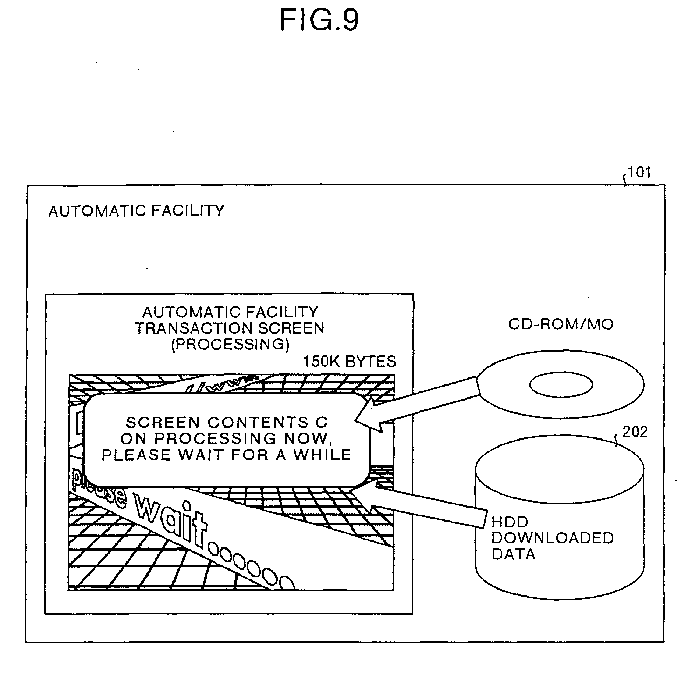

Fig. 9 is an explanatory view showing a method for displaying the transaction screen of the automatic facility 101 according to the first embodiment. For example, when the transaction screen of the screen No. 4 (a screen for waiting a processing), the screen contents C (an image around 150 kilo byte), which is downloaded in advance, is read from the HDD 202 to display the transaction screen. The screen contents C may be read from the CD-ROM. Since the transaction screen data of the screen No. 4 does not include the character information, it is not necessary to download on the transaction.

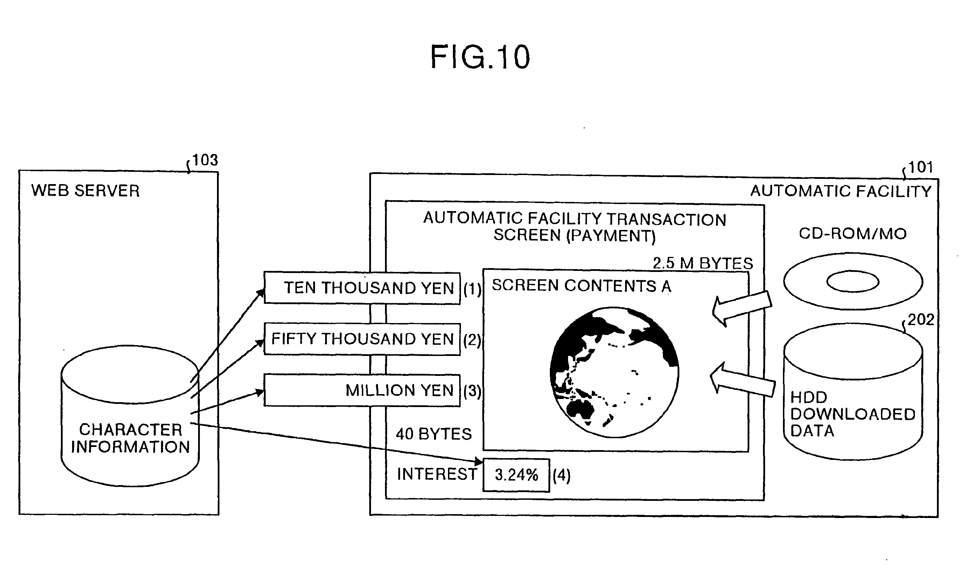

Fig. 10 is an explanatory view showing other method for displaying the transaction screen of the automatic facility 101 according to the first embodiment. For example, when the transaction screen of the screen No. 1 (a screen for selecting amount of money for taking out from the account), the screen contents A (an animation around 2.5 kilo byte), which is downloaded in advance, is read from the HDD 202 to display the transaction screen. The screen contents A may be read from the CD-ROM. The character information 1 through 4 may be downloaded from the Web server 103 to display the transaction screen.

In this state, the transaction screen data may be separated into a data with a high frequency of changing (fluxional information) and a data with a low frequency of changing (fixed information). The fluxional information may be downloaded on the transaction and the fixed information may be downloaded in advance. In the example shown in Fig. 10, information of interest comprises the fluxional information and it is downloaded on the transaction. In this example, other than the information of interest comprise the fixed information to be read from the HDD 202.

In the case of the transaction other than in a bank or a consumer credit company, for example, in the case of an electronic business transaction (shopping), information for purchasing and paying comprise the character information or the fluxional information or the information for a photograph of a commodity comprise the screen contents and the fixed information. Further, in the case of booking of a Japanese inn or a hotel, the information for an unoccupied room or a charge comprises the character information or the fluxional information and the information for a photograph of the building and a map or the like comprise the screen contents or the fixed information. Further, in the case that a free ticket of a movie is presented, the information of a theatre name, a screened time and a charge or the like comprise the character information or the fluxional information and the information of a movie commercial film or the like comprises the screen contents or the fixed information.

As described above, according to the first embodiment, the transaction screen data acquisition unit 301 acquires the transaction screen data via the communication line and the storing unit 302 stores the transaction screen data, which is acquired by the transaction screen data acquisition unit 301. Thus, the transaction screen data can be updated speedy or in real time via the communication line. Further, it is not necessary for the service staff to prepare the transportable recording medium for every update and install respective automation facilities. As a result, it achieves an effect that an appropriate transaction screen is displayed with a small labor and a low cost.

Further, the Web server 103 may switch the transaction screen data to be transmitted for every place (a branch) where the automatic facility 101 is installed, the automatic facility 101 and a client. Thus, the transaction screen data can be discriminated for every place (a branch) where the automatic facility 101 is installed, the automatic facility 101 and a client, so that a delicate service in response to the installation place, the facility itself and the client, respectively, can be delivered. For example, it is possible to display a local information such as an event information in the vicinity of the installation place or the like and a commercial message and an advertisement in response to an individual information such as an outstanding account of the client or the like.

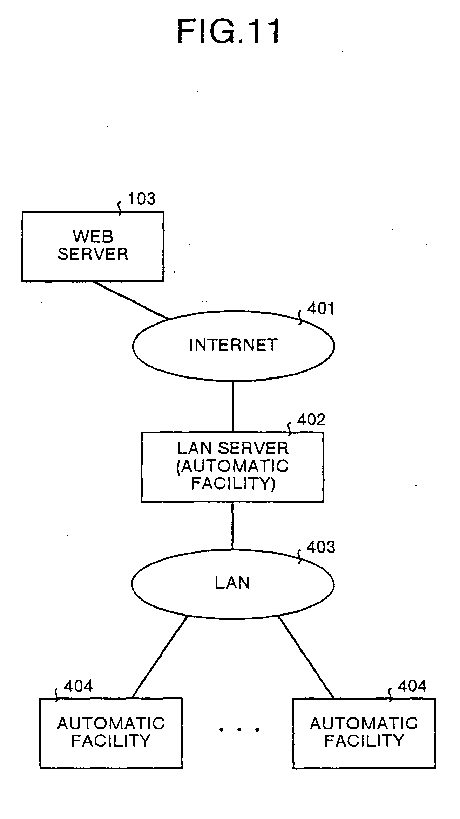

A second embodiment of the present invention composes an automatic facility system by connecting the server device to a plurality of automation facilities communicably, so that the server device obtains the transaction screen data via a predetermined communication line from the outside of the automatic facility system to transmit the data to respective automation facilities. At first, the constitution of the second embodiment of the present invention will be explained. Fig. 11 is a schematic block view showing the automatic facility system's constitution according to the second embodiment of the present invention. This automatic facility system is composed such that a LAN server 402 and a plurality of the automatic facility 404 are connected by a LAN. The LAN server 402 communicates to the Web server 103 via a dedicated line of a public circuit. Further, the LAN server 402 may communicate to the transaction host 102 as shown in Fig. 1.

The communication between the LAN server 402 and the Web server 103 may be performed by a dial-up remote access or via the Internet 401. The constitution of the LAN server 402 may be the same as that of a personal computer or a work station for a general server or a server integrated with the automatic facility. In other words, the LAN server 402 may be composed of the automatic facility 101 of the first embodiment added with a transaction screen data transmission unit 703, to be described later. The LAN server 402 acquires the transaction screen data from the transaction host 102 or the Web server 103 at a periodic timing or an arbitrary timing to transmit the acquired transaction screen data to respective automation facilities 404. The respective automation facilities 404 receive the transaction screen data from the LAN server 402 via a LAN 403.

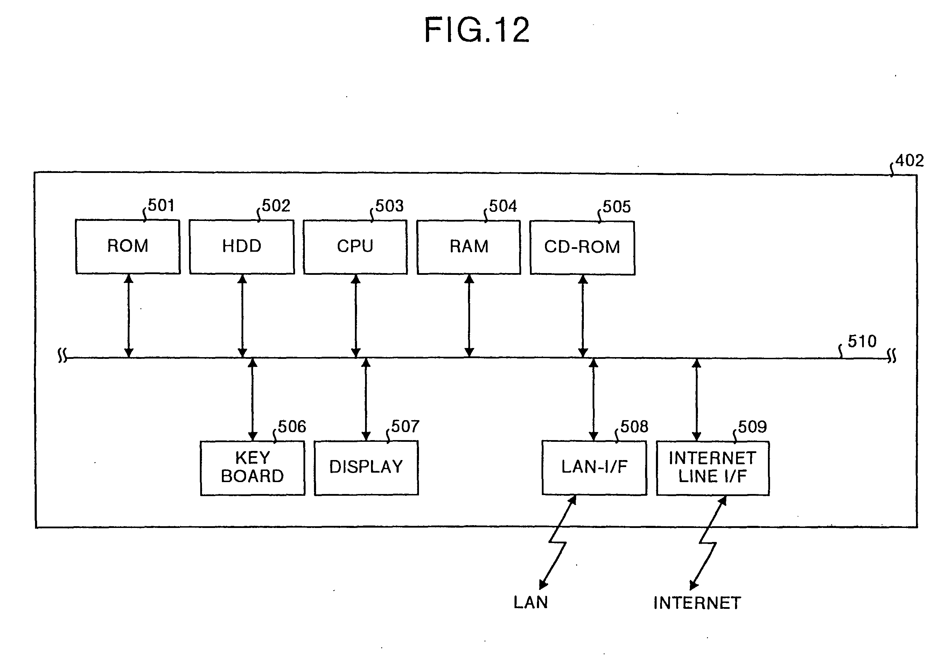

Fig. 12 is a schematic block view showing a hard ware constitution of the LAN server 402 shown in Fig. 11. The LAN server 402 comprises a ROM 501 for storing a boot program or the like, a controlling program for controlling each unit of the LAN server 402, a HDD 502 for storing the transaction screen data or the like, a CPU 503 for controlling each unit of the LAN server 402 on the basis of the program which is stored in the ROM 501 and the HDD 502, a RAM 504 to be used as a working area of the CPU 503 or the like, a CD-ROM drive 505 for reading the program and the data from the CD-ROM, a key board 506 to be inputted by the user, a display 507 such as a CRT and a LCD or the like for displaying the transaction screen, a LAN-I/F 508 for communicating with the automatic facility 404 via the LAN 403, the Internet line I/F 509 for communicating with the Web server 103 via the Internet and a bus 510 for connecting these respective units.

The ROM 501 and the HDD 502 store the boot program, the controlling program and the transaction screen data or the like. The kinds of the ROM 501 and the HDD 502 are not particularly limited and the other recording mediums may be used in place of the ROM 501 and the HDD 502. The CPU 503 controls each unit of the LAN server 402 on the basis of the program stored in the ROM 501 and the HDD 502. The RAM 504 is used as a working area or the like of the CPU 503.

For example, the CD-ROM drive 505 is used to install the controlling program from the CD-ROM into the HDD 502 upon booting the system. In this case, the DVD drive and the other units for activating the transportable recording mediums may be used in place of the CD-ROM drive 505. The key board 506 transfers the input from the user to the CPU 503. The display 507 displays various screens. The LAN-I/F 508 communicates with respective automation facilities 404 via the LAN 403. The Internet line I/F 509 communicates with the Web server 103 via the Internet 401.

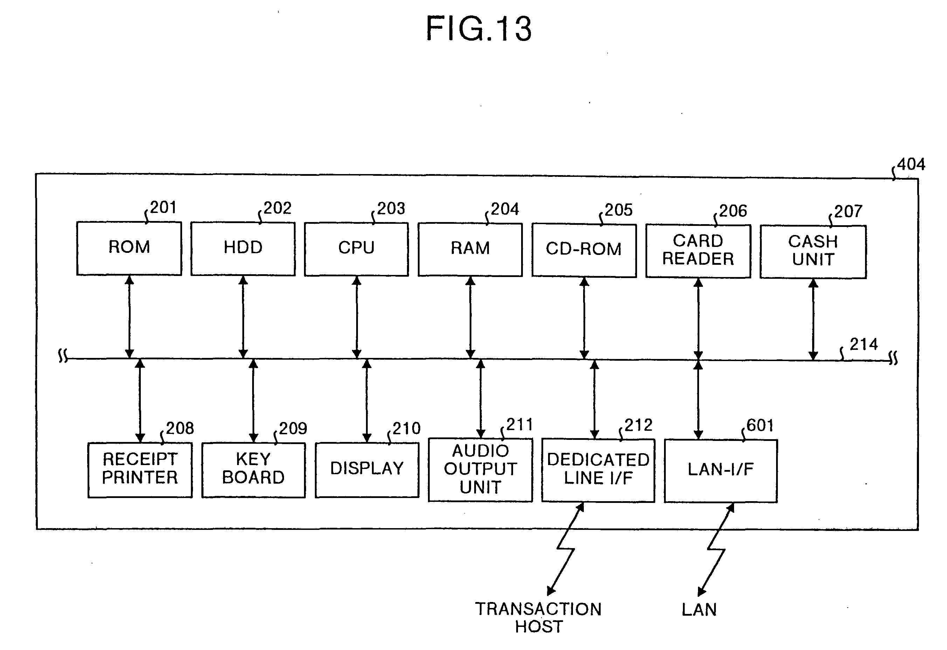

Fig. 13 is a schematic block view showing a hard ware constitution of the automatic facility 404 shown in Fig. 11. Since the constitution of the automatic facility 404 is basically same as that of the automatic facility 101 of the first embodiment, with respect to the identical parts as those in Fig. 2, the identical reference numerals are given and the explanations thereof are omitted. Therefore, with respect to only different parts, the explanation will be given below. The automatic facility 404 is provided with a LAN-I/F 601 for connecting to the LAN 403 in place of the Internet line I/F 213 of the automatic facility 101 of the first embodiment. The LAN-I/F 601 serves to communicate to the LAN server 402 via the LAN 403.

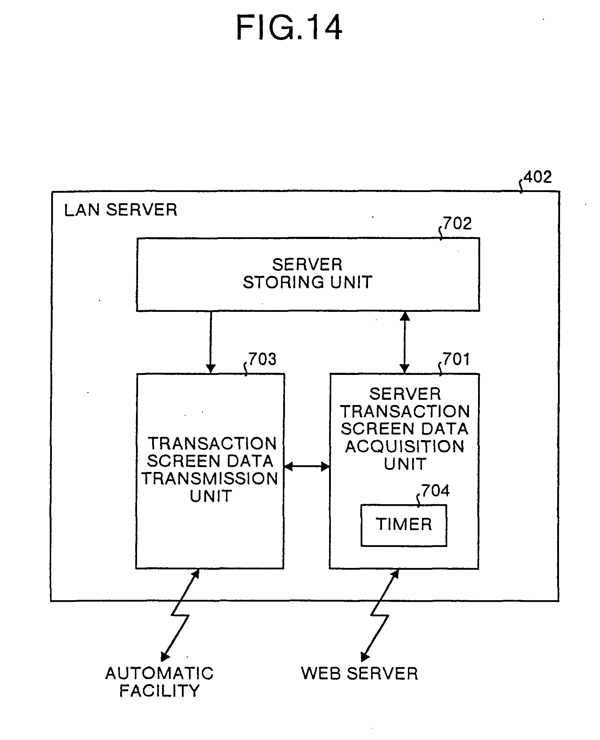

Fig. 14 is a schematic block view showing the LAN server 402's constitution shown in Fig. 11. The LAN server 402 comprises a server transaction screen data acquisition unit 701 for acquiring the transaction screen data from the Web server 103 via a predetermined communication line, a server storing unit 702 for storing the transaction screen data, which is acquired by the server transaction screen data acquisition unit 701 and a transaction data transmission unit 703 for transmitting the transaction screen data, which is stored in the server storing unit 702, to respective automation facilities 404.

The transaction screen data is described on the basis of HTML and it is generated by a general purpose HTML generation tool with multi functions and a usability in the Web server 103 and the other personal computers or the like. The server transaction screen data acquisition unit 701 has a timer 704. For example, the server transaction screen data acquisition unit 701 acquires the transaction screen data via the Internet line I/F 509 at a predetermined time. As a communication protocol on acquiring the transaction screen data, an FTP or an HTTP may be used. However, by using the HTTP, the transaction screen data can be obtained despite of file formats.

The storing unit 702 stores the transaction screen data acquired by the server transaction screen data acquisition unit 701 in the recording medium such as the HDD 502 and the RAM 504 or the like. The transaction data transmission unit 703 transmits the transaction screen data, which is stored in the server storing unit 702, to respective automation facilities 404 via the LAN 403.

All transaction screen data may be acquired from the Web server 103 to transmit them to respective automation facilities 404. The character information and the fluxional information may be acquired from the Web server 103 and the screen contents and the fixed information may be read from the CD-ROM. These information may be transmitted to respective automation facilities 404.

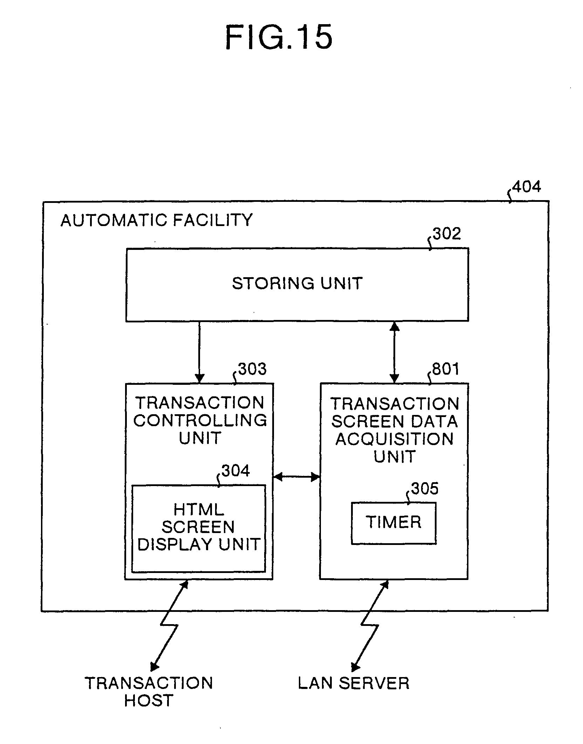

Fig. 15 is a schematic block view showing the automation facility 404's constitution shown in Fig. 11. Since the constitution of the automatic facility 404 is basically same as that of the automatic facility 101 of the first embodiment, with respect to the identical parts as those in Fig. 3, the identical reference numerals are given and the explanations thereof are omitted. Therefore, with respect to only different parts, the explanation will be given below. The automatic facility 404 is provided with a transaction screen data acquisition unit 801 for acquiring the transaction screen data from the LAN server 402 via the LAN 403 in place of the automatic facility 101 of the first embodiment. The transaction screen data acquisition unit 801 operates in the same way as the operation of the transaction screen data acquisition unit 301 of the first embodiment except that the transmitter of the transaction screen data is different from that of the transaction screen data acquisition unit 301.

Heretofore, the functional constitutions of the LAN server 402 and the automatic facility 404 are explained. However, respective components the LAN server 402 and the automatic facility 404 in Figs. 14 and 15 are shown conceptually in functions, so that they are not required to be configured as shown in Figs. 14 and 15 physically. For example, a whole or a portion of the processing functions belonged to the LAN server 402 and the automatic facility 404 may be realized by the CPU 203 and the CPU 503 and the programs which are understood and executed in this CPU 203 and the CPU 503.

In other words, a computer programs to command the CPU 203 and the CPU 503 in cooperation with an OS (Operation System) or the like is stored in the ROM 201, the ROM 501, the HDD 202 and the HDD 502 so that the CPU 203 and the CPU 503 perform various processing. Then, the CPU 203 and the CPU 503 perform various processing according to this program. Further, a whole or a portion of the processing functions belonged to the automatic facility 404 may be realized as a hard ware in a wired logic.

In the above described constitution, the operation of the second embodiment will be explained below with reference to the drawings. In the operation of the second embodiment, the automatic facility 404 performs the processing for downloading the transaction screen data and the processing for displaying the transaction screen data in the same way as the processing of the first embodiment except that the transmitter of the transaction screen data is the LAN server 402. Further, the LAN server 402 performs the processing for downloading the transaction screen data (the processing for downloading the transaction screen data to the LAN server 402) in the same way as the processing of the first embodiment. The LAN server 402 may transmit the transaction screen data upon the request from the automatic facility 404 or may transmit the transaction screen data from the LAN server 402 in a push type.

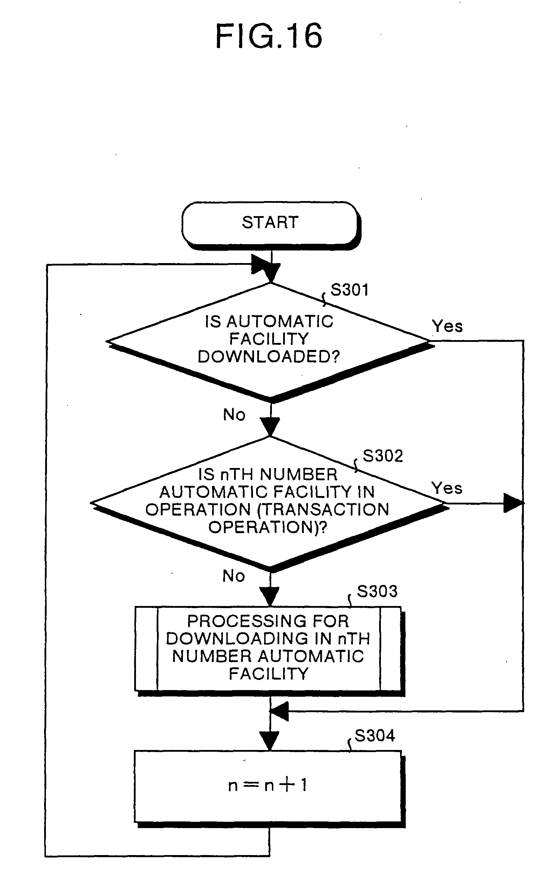

Fig. 16 is a flow chart showing a flow of the processing for downloading the transaction screen data (a push type) from the LAN server 402 to the automatic facility 404 according to the second embodiment. In this the processing for downloading the transaction screen data (a push type), the transaction screen data transmission unit 703 of the LAN server 402 serves to download the transaction screen data from the Web server 103. Then, the transaction screen data transmission unit 703 detects whether a latest transaction screen data, i.e., the same transaction screen data as the transaction screen data stored in the LAN server 402 is downloaded in the nth (n is a parameter and its initial value is 1) number automatic facility 404 or not (S301). If the latest transaction screen data is not downloaded in the nth number automatic facility 404, the transaction screen data transmission unit 703 detects whether the nth number automatic facility 404 is in the operation (transaction operation) or not (S302).

When the nth number automatic facility 404 is not in the operation, i.e., in idle, the LAN server 402 transmits the transaction screen data to the nth number automatic facility 404 to download the transaction screen data in the nth number automatic facility 404 (S303). Then, adding 1 to the parameter n (however, if n is a last number N of the automatic facility 404, the number returns to 1), the processing returns to step S301. When the latest transaction screen data is downloaded into the nth number automatic facility 404 in step S301 and the nth number automatic facility 404 is in the operation in step S302, the processing proceeds to step S304 without downloading to the nth number automatic facility 404. Then, the above processing is repeated until the download to all of the automation facilities 404 in the automatic facility system is completed. Further, the numbers such as the first, the second or the like of the automatic facility 404 are capable of being set arbitrarily.

As described above, according to the second embodiment, the server transaction screen data acquisition unit 701 of the LAN server 402 acquires the transaction screen data via the Internet 401 and the transaction screen data transmission unit 703 transmits the transaction screen data, which is acquired by the server transaction screen data acquisition unit 701 to the plural automation facilities 404. The transaction screen data acquisition unit 801 of the automatic facility 404 acquires the transaction screen data from the transaction screen data transmission unit 703 and the storing unit 302 stores the transaction screen data, which is acquired by the transaction screen data acquisition unit 801. Thus, the transaction screen data can be updated speedy or in real time via the Internet 401. Further, it is not necessary for the service staff to prepare the transportable recording medium for every update and install respective automation facilities. As a result, it achieves an effect that an appropriate transaction screen is displayed with a small labor and a low cost.

Further, the plural automation facilities 404 are connected to the LAN server 402 with a LAN, so that only LAN server 402 is required to be connected to the Internet 401. In this arrangement, the transaction screen data can be obtained more efficiently compared with the case that the respective automation facilities are connected to the Internet 401, one by one to acquire the transaction screen data. As a result, it is possible to reduce the communication cost.

Further, a computer program to realize the method for updating the transaction screen data according to the first and the second embodiments is stored in a transportable recording medium including a magnetic disk such as a floppy disk or the like, a semiconductor memory such as a ROM, an EPROM, an EEPROM, a flash ROM or the like (including a built-in memory in a cartridge and a PC card or the like), an optical disk such as a CD-ROM and a DVD or the like and an optical magnetic disk such as an MO or the like. Installing the program recorded in the above recording medium in the recording medium of a fixed type such as a ROM, a RAM and a hard disk built in the automatic facility or the server device allows the automatic facility or the server device to be provided with a transaction screen data update function, as described above.

This program may be transmitted via a network such as a LAN, a WAN and the Internet or the like and the transmitted program may be installed in the recording medium of a fixed type in the automatic facility or the server device. The program is not necessary to be configured uniquely, but includes a dispersed configuration as a plurality of modules and a library and a configuration to attain its function in cooperation with the other program such as an OS or the like.

As explained above, in the consumer transaction facility according to the present invention, the acquisition means acquires the transaction screen data via a communication line and storing means stores the transaction screen data, which is acquired by the acquisition means. Accordingly, it is possible to update the transaction screen data via the communication line speedy or in a real time. Further, since it is not necessary to prepare a transportable recording medium for every update and install every consumer transaction facility by the service staff, it is possible to display an appropriate transaction screen, save labor and reduce the cost.

In the consumer transaction facility according to the present invention, the acquisition means acquires a whole or a part of the transaction screen data at a predetermined timing other than timing at the transaction. Hereby, a whole or a partial install of the transaction screen data can be omitted upon the transaction, so that the processing time can be cut down on the transaction and a smooth transaction processing can be obtained.

In the consumer transaction facility according to the present invention, the transaction screen data is separated into a first data with a small data size such as a character data or the like and a second data with a large data size such as an image data and an animated data or the like. The acquisition means may acquire the first data on the transaction and acquires the second data at a predetermined timing other than a timing at the transaction. Accordingly, a latest data may be used as the first data since the first data does not require much time for installing. With respect to the second data, since it requires much time for installing, the second data is installed in advance. Thus, a smooth transaction processing can be obtained.

In the consumer transaction facility according to the present invention, the transaction screen data may be separated into a first data with a high frequency of changing and a second data with a low frequency of changing and the acquisition means acquires the first data on the transaction and acquires the second data at a predetermined timing other than a timing at the transaction. Accordingly, a latest data may be used as the first data and the second data is installed in advance, so that a smooth transaction processing can be obtained.

In the consumer transaction facility according to the present invention, the transaction screen data may be described by an HTML screen display means for displaying the transaction screen according to the transaction screen data, which is described by the HTML, may be provided. Accordingly, despite of kinds of a consumer transaction facility and a device for generating a transaction screen data, a general purpose HTML generation tool with multi functions and a usability is capable of generating a transaction screen data, so that it becomes easy to generate the transaction screen data and the cost can be reduced.

In the consumer transaction facility according to the present invention, the acquisition means may acquire the transaction screen data via the Internet. Accordingly, if there is a server device, which is capable of being connected to the Internet, the maintenance of the transaction screen, namely, setting and updating of the transaction screen data, can be performed from anywhere. As a result, the maintenance of the transaction screen becomes easy.

In the consumer transaction facility according to the present invention, the server acquisition means of the server device acquires the transaction screen data via the communication line and the transmission means transmits the transaction screen data, which is acquired by the server acquisition means to a plurality of consumer transaction facilities. The acquisition means of the consumer transaction facility acquires the transaction screen data from the transmission means and the storing means stores the transaction screen data, which is acquired by the acquisition means. Accordingly, it is possible to update the transaction screen data via the communication line speedy or in a real time. Further, since it is not necessary to prepare a transportable recording medium for every update and install every consumer transaction facility by the service staff, it is possible to display an appropriate transaction screen, save labor and reduce the cost.

In the recording medium, which is readable in a computer and records a transaction screen data updating program according to the present invention, the transaction screen data updating program to allow a computer to effect a method such that acquiring step acquires the transaction screen data via a predetermined communication line and updating step updates the transaction screen data, which is stored in the consumer transaction facility by the transaction screen data acquired by the acquiring step is recorded. Therefore, the program becomes possible to be read in the computer, so that it is possible to realize the operation by the method in the computer.

In the recording medium, which is readable in a computer and records a transaction screen data updating program according to the present invention, the transaction screen data updating program to allow a computer to effect a method such that server acquiring step acquires the transaction screen data via a predetermined communication line, transmitting step transmits the transaction screen data acquired by the server acquiring step to a plurality of consumer transaction facilities, acquiring step acquires the transaction screen data, which is transmitted by the transmitting and updating step updates the transaction screen data, which is stored in the consumer transaction facility by the transaction screen data, which is acquired by the acquiring step is recorded. Therefore, the program becomes possible to be read in the computer, so that it is possible to realize the operation by the method in the computer.

Although the invention has been described with respect to a specific embodiment for a complete and clear disclosure, the appended claims are not to be thus limited but are to be construed as embodying all modifications and alternative constructions that may occur to one skilled in the art which fairly fall within the basic teaching herein set forth.

## Claims

1. A consumer transaction facility (101) for processing a transaction in response to the inputting operation when a user performs the inputting operation on a transaction screen comprising:
acquisition unit (301) which acquires a transaction screen data of said transaction screen via a predetermined communication line; and
storing unit (302) which stores said transaction screen data, which is acquired by said acquisition unit (301).

2. A consumer transaction facility according to claim 1, wherein said acquisition unit (301) acquires a whole or a part of said transaction screen data at a predetermined timing other than a timing at the transaction.

3. A consumer transaction facility (101) according to claim 1, wherein said transaction screen data is separated into a first data with a small data size such as a character data or the like and a second data with a large data size such as an animated data or the like; and
said acquisition unit (301) acquires said first data on the transaction and acquires said second data at a predetermined timing other than a timing at the transaction.

4. A consumer transaction facility according to claim 1, wherein said transaction screen data is separated into a first data with a high frequency of changing and a second data with a low frequency of changing; and
said acquisition unit (301) acquires said first data on the transaction and acquires said second data at a predetermined timing other than a timing at the transaction.

5. A consumer transaction facility as claimed in claims 1, 2, 3 or 4, wherein said transaction screen data is described by HTML, further comprising HTML screen display unit which displays said transaction screen according to said transaction screen data, which is described by the HTML.

6. A consumer transaction facility (101) as claimed in claims 1, 2, 3 or 4, wherein said acquisition unit acquires said transaction screen data via the Internet.

7. A consumer transaction facility system (404) for processing a transaction in response to the inputting operation when a user performs said inputting operation on a transaction screen including a plurality of consumer transaction facilities (404) and a server device (402), which are connected to intercommunicate; wherein said server device (402) comprises server acquisition unit (701) which acquires said transaction screen data of said consumer transaction facility from the outside of said consumer transaction facility system via a predetermined communication line and transmission unit (703) which transmits said transaction screen data acquired by said server acquisition unit to said plurality of consumer transaction facilities (404); and
said consumer transaction facility (404) comprises acquisition unit (801) which acquires said transaction screen data from said transmission unit (703) and storing unit (302) which stores said transaction screen data, which is acquired by said acquisition unit (801).

8. A recording medium, which is readable in a computer and records a transaction screen data updating program, for updating said transaction screen data of a consumer transaction facility (101, 404) for processing a transaction in response to the inputting operation when a user performs said inputting operation on a transaction screen; wherein said transaction screen data updating program allows a computer to execute a step for acquiring said transaction screen data via a predetermined communication line and a step for updating said transaction screen data, which is stored in said consumer transaction facility (101, 404) by said transaction screen data acquired by said acquiring step.

9. A recording medium, which is readable in a computer and records a transaction screen data updating program, for updating said transaction screen data of a consumer transaction facility for processing a transaction in response to the inputting operation when a user performs said inputting operation on a transaction screen; wherein said transaction screen data updating program allows a computer to execute server acquiring step for acquiring said transaction screen data via a predetermined communication line, step for transmitting said transaction screen data acquired by said server acquiring step to a plurality of consumer transaction facilities, step for acquiring said transaction screen data, which is transmitted by said step for transmitting and step for updating said transaction screen data, which is stored in said consumer transaction facility (101, 404) by said transaction screen data, which is acquired by said step for acquiring.
